# EUROPÄISCHE PATENTSCHRIFT

(11) **EP 3 156 229 B1**
(45) Veröffentlichungstag und Bekanntmachung des Hinweises auf die Patenterteilung: **29.08.2018**
(21) Anmeldenummer: 15189751.9
(22) Anmeldetag: 14.10.2015
(51) Int. Cl.: B32B 37/00, B32B 37/06, B32B 27/12

(54) **VERPACKUNGSLAMINAT AUS FASERSTOFF MIT SCHWÄCHUNGSLINIE ALS ÖFFNUNGSHILFE**
PACKAGING LAMINATE MADE FROM FIBROUS MATERIAL AND LINE OF WEAKNESS AS OPENING AID
LAMINE D'EMBALLAGE EN MATIERE FIBREUSE AYANT UNE LIGNE DE PRE-DECOUPE EN TANT QU'AIDE A L'OUVERTURE

(43) Veröffentlichungstag der Anmeldung: 19.04.2017
(73) Patentinhaber: Constantia Hueck Folien GmbH & Co. KG, 92712 Pirk (DE)
(72) Erfinder: Grefenstein, Achim, 67122 Altrip (DE); Geillersdörfer, Ingo, 92708 Mantel (DE); Kick, Markus, 92637 Weiden (DE); Lurtsch, Josef, 92696 Flossenbürg (DE)
(74) Vertreter: Patentanwälte Pinter & Weiss OG

(56) Entgegenhaltungen:
- EP-A1- 2 813 200
- DE-A1- 19 715 938
- DE-A1- 19 851 667

## Beschreibung

Die gegenständliche Erfindung betrifft ein Verfahren zum Herstellen eines Verpackungslaminats aus einer Trägerfolie, auf die ein Faserstoff auf Basis von thermoplastischen Kunststofffasern mittels eines Kaschiermittels, unter Ausbildung einer Verbindungsschicht zwischen Faserstoff und Trägerfolie, aufkaschiert ist, sowie das damit hergestellte Verpackungslaminat.Die Erfindung betrifft weiters eine Verwendung des Verpackungslaminats zur Herstellung einer Verpackung.

Verpackungsfolien wie sie in der Lebensmittelbranche für die Herstellung von Verpackungen von Lebensmitteln verwendet werden, bestehen zu einem großen Teil aus Kunststofffolien oder Kunststofffolienverbunden. In einem Kunststofffolienverbund ist zumindest eine Schicht einer Kunststofffolie mit zumindest einer weiteren Schicht, wie beispielsweise eine weitere Kunststofffolie, eine Papierschicht oder eine Aluminiumfolie, verbunden.

Verpackungen aus solchen Verpackungsfolien besitzen oftmals auch Aufreißhilfen, um ein einfaches Öffnen der Verpackungen zu ermöglichen. Dabei kommen typische Aufreißhilfen wie Schwächungslinien, Perforationen, Öffnungsbänder, etc. zum Einsatz. Solche Aufreißhilfen werden oftmals während der Herstellung der Verpackung eingebracht, beispielsweise eine Schwächungslinie, die die Verpackungsfolie teilweise durchschneidet, mittels eines Lasers.

Für industrielle Verpackungen, wie Schwergutsäcke, werden auch sogenannten Faserstoffe aus Kunststofffasern verwendet, da solche Materialen hochbelastbar und reißfest sind. Als Faserstoffe werden dabei Vliesstoffe (non-woven) und Gewebe (woven) eingesetzt, die naturgemäß luftdurchlässig sind. Faserstoffe werden deshalb heute hauptsächlich für Nicht-Lebensmittelanwendungen verwendet, beispielsweise zum Verpacken von Stückgut, Sand und ähnlichem. Bei feuchteempfindlichen Füllgütern, wie z.B. Baustoffen, werden die Faserstoffe üblicherweise mit einer wasserundurchlässigen Beschichtung aus einem kompatiblen Thermoplast, meist Polyethylen (PE) oder Polypropylen (PP), beschichtet.

Lebensmittelverpackungen müssen zum Schutz der verpackten Lebensmittel jedoch in der Regel bis zu einem gewissen Grad luftundurchlässig bzw. sauerstoffundurchlässig sein und weisen oftmals auch andere Barriereschichten auf, wie beispielsweise einen Feuchteschutz, Schutz gegen aggressive Stoffe, etc. Das wird häufig durch speziell aufgebaute Folienverbunde als Verpackungsmaterial realisiert.

Faserstoffe werden selten als Verpackungsmaterial für Lebensmittel verwendet, was einerseits daran liegt, dass der Faserstoff auf eine luftundurchlässige Trägerfolie aufgebracht werden muss, wie beispielswiese in der DE 10 2006 042 058 A1 für einen Vliestoff beschrieben ist. In der DE 10 2006 042 058 A1 ist insbesondere eine Verpackung für Tiefkühl- oder
Kühlprodukte beschrieben, wobei durch den Vliesstoff die optischen und haptischen Eigenschaften der Verpackung verbessert werden sollen.

Andererseits sind solche Verpackungen aus Folienverbunden mit einem Faserstoff aufgrund der hohen Reißfestigkeit des Faserstoffes nur schwer bis gar nicht von Hand zu öffnen. Daher werden Verpackungen mit Folienverbunden mit einem Faserstoff bisher eher für industrielle Großpackungen verwendet, in denen die Reißfestigkeit wiederum von Vorteil ist. Solche Verpackungen werden einfach mit einem Hilfsmittel geöffnet, z.B. mit einem Messer. Eher selten finden solche Folien aber aus diesem Grund Anwendung in Verpackungen für den Verbraucherbereich, da es dort auf eine einfache und schnelle Öffnungsfähigkeit ankommt.

Faserstoffe haben aber eine weitere unangenehme Eigenschaft, die einer Verwendung solcher Materialien im Bereich der Lebensmittelverpackungsindustrie, egal ob in der industriellen Großverpackung oder im Verbraucherbereich, entgegensteht. Faserstoffe neigen nämlich dazu, dass sich einzelne Fasern aus dem Faserstoff, insbesondere beim Öffnen der Verpackung, lösen oder ausgerissen werden, was zu einer unerwünschten und eventuell unerlaubten Verschmutzung der verpackten Lebensmittel mit Fasern führen kann.

Verpackungen wie Beutel, Säcke, usw. werden in der Regel gefertigt, indem das Verpackungsmaterial in gewünschter Weise gefaltet und/oder aneinandergelegt und an vorgesehenen Stellen gesiegelt wird. Der Siegelvorgang erfolgt meistes mittels Siegelbacken unter Druck und Temperatur. Dabei werden aneinander liegende Siegelschichten, meistens auf Polyethylen- oder Polypropylen-Basis, lokal aufgeschmolzen und zusammengepresst, sodass sich nach Abkühlen eine Verbindung zwischen den Siegelschichten ergibt. Die Siegelschichten sind dabei die (aus Sicht der fertigen Verpackung) innersten Schichten des Verpackungsmaterials. Die Siegelbacken liegen aber ganz außen an, was bedeutet, dass die Wärme zum Siegeln durch das ganze Verbundmaterial durchgeleitet werden muss, wobei die äußeren Schichten aber natürlich nicht aufschmelzen dürfen. Die Siegelschichten haben daher eine Schmelztemperatur, die unterhalb der Schmelztemperaturen der äußeren Schichten der Verpackungsfolie liegt.

Die EP 2 813 200 A1 offenbart beispielsweise ein absorbierendes Komposit, das zwischen zwei Materiallagen angeordnete Superabsorber-Partikel aufweist, wobei die beiden Materiallagen unter Ausbildung einer oder mehrerer Kammern verschweißt werden. Zum Verschweißen wird dabei ein Ultraschall-Verfahren verwendet, wobei die Materiallagen mit den dazwischen angeordneten Superabsorber-Partikeln durch eine Ultraschallschweißeinheit mit Sonotrode und Gravurwalze bewegt werden. Zusätzlich können im Wesentlichen punktförmige Hilfsverschweissungen vorgesehen sein, die die Superabsorber-Partikel zusätzlich in der Kammer fixieren. Die Hilfsverschweissungen werden mittels thermischer Bondierung der Materiallagen mittels Kalanderwalzen durchgeführt.

In der DE 198 51 667 A1 ist ein mehrschichtiges Verbundmaterial aus zumindest zwei thermoplastischen Schichten offenbart, wobei eine Schicht ein Vlies aus thermoplastischen Fasern ist. Die beiden Schichten sind durch Thermobonding an Bonding-Zonen miteinander verbunden. Im Bereich der Bonding-Zonen sind die Schichten teilweise miteinander verschmolzen, die Bonding-Zonen verleihen dem Verbundmaterial eine dreidimensionale Struktur.

Die DE 197 15 938 A1 offenbart ein mehrschichtiges Koextrudat aus zumindest drei Schichten. Die mittlere Schicht ist eine elastische Tragfolie aus einem thermoplastischen Elastomer, die auf zumindest einer Seite mit einer dünnen Deckfolie verbunden ist. Die Deckfolie besteht aus einer thermoplastischen, spröde aushärtenden, Kunststoff-Grundsubstanz mit darin verteilten Zusatzstoffen. Eine Vlieslage kann auf die Deckfolie aufgelegt werden und mittels einer Walze mit punkt- oder streifenförmigen Druckbereichen, z.B. Walzenstachel, aufgepresst werden. Durch den Druck der Walzenstachel wird die Deckfolie im Bereich der Walzenstachel aufgebrochen und das Vlies mit der klebrigen Tragfolie verklebt.

Es ist eine Aufgabe der gegenständlichen Erfindung, ein Verpackungslaminat aus einer Trägerfolie, auf die ein Faserstoff auf Basis von thermoplastischen Kunststofffasern aufkaschiert ist, und eine Verpackung aus einem solchen Verpackungslaminat anzugeben, die ein einfaches, sauberes und sicheres Öffnen des Verpackungslaminat bzw. der Verpackung ermöglicht.

Diese Aufgabe wird erfindungsgemäß dadurch gelöst, dass die Kunststofffasern des Faserstoffes im Bereich einer Schmelzzone mit einem auf eine Andrücktemperatur temperierten Andrückteil vollständig aufgeschmolzen werden, um im Bereich der Schmelzzone eine definierte Schwächungslinie auszubilden, wobei die Grenzschicht zwischen Faserstoff und Trägerfolie mit aufgeschmolzen wird. Das erfindungsgemäße Verpackungslaminat zeichnet sich dadurch aus, dass der Faserstoff zur Ausbildung einer Schwächungslinie im Bereich einer Schmelzzone vollständig aufgeschmolzen ist, wodurch die Kunststofffasern des Faserstoffes im Bereich der Schmelzzone getrennt sind. Der aufgeschmolzene und erhärtete Film im Bereich der Schmelzzone hat eine geringere mechanische Festigkeit, als der restliche Faserstoff. Auf diese Weise gelingt es, den Faserstoff gezielt nur im Bereich der Schwächungslinie zu schwächen und dabei die Trägerfolie im Wesentlichen unversehrt zu lassen. Und das obwohl die Schmelztemperatur des Faserstoffes anwendungsbedingt über der Schmelztemperatur der Trägerfolie liegt. Es kann eine saubere, lokal sehr abgegrenzte Schwächungslinie eingebracht werden, entlang der das Verpackungslaminat sauber und einfach aufgerissen werden kann. Gleichzeitig kann ein Lösen oder Ausreißen von Kunstsofffasern beim Reißen verhindert werden, da im Bereich der erhärteten Schmelzzone, die die Schwächungslinie ausbildet, keine Kunststofffasern mehr vorhanden sind. Nicht zuletzt wird die Oberfläche des Faserstoffes im Bereich der Schwächungslinie nicht negativ beeinträchtigt, beispielsweise durch vorstehende angeschmolzene Kunststofffasern, hervorstehende Aufwölbungen, oder ähnlichem.

Auf den ersten Blick könnte man die gewünschte Schwächungslinie auch mit einem anderen Verfahren einbringen, was aber nachteilig wäre. Schwächungslinien werden in der Verpackungsindustrie oftmals mittels Laser in eine Verpackungsfolie eingeschnitten. Diese Laserbearbeitung funktioniert bei homogenen Materialien wie Kunststofffolien gut, da die Laserparameter gut eingestellt werden können und im Wesentlichen konstant bleiben. Bei einem inhomogenen Material wie einem Faserstoff ist das aber nicht der Fall. Da auf jeden Fall ein Durchschneiden der gesamten Verpackungsfolie oder eine zu starke Schwächung der Siegelschicht verhindert werden muss, wäre eine aufwendige Steuerung des Laserschneidens erforderlich, insbesondere bei einer Kombination aus einem Faserstoff und einer Siegelschicht aus der gleichen Materialgruppe, wie z.B. einem Polyolefin. Abgesehen davon haben Versuche gezeigt, dass sich beim Laserschneiden eines Faserstoffes raue Aufwölbungen am Rand der Laserschnittlinie ausbilden, was bei einer Verpackung aus haptischen Gründen unerwünscht wäre. Auch wurde festgestellt, dass, selbst wenn es technisch in einem Produktionsprozess möglich wäre, ein Durchtrennen des Faserstoffes mittels Laser alleine nicht ausreichend ist, da der Faserstoff zwar wie gewünscht reißt, sich jedoch die deutlich zähere darunter liegende Trägerfolie beim Öffnen dehnt und vom Faserstoff delaminiert. Der Riss wandert also in die Grenzschicht zwischen Faserstoff und Trägerfolie und die Trägerfolie dehnt sich lediglich. Ein sauberes und einfaches Öffnen ist damit nicht möglich.

Dahingegen wird durch das erfindungsgemäße Verfahren zum Erzeugen der Schwächungslinie diese Grenzschicht zwischen Faserstoff und Trägerfolie verfestigt und konsolidiert, was einen sauberen Riss entlang der Schwächungslinie ermöglicht. Dass ergibt sich daraus, dass die Grenzschicht zwischen Faserstoff und Trägerfolie angeschmolzen wird und die Verbindung zwischen Trägerfolie und Faserstoff im Bereich der Schwächungslinie deutlich stärker wird. Dadurch kommt es nicht zum Delaminieren beim Öffnen, sondern zu einem sauberen Riss, auch durch die Trägerfolie hindurch.

Es hat sich herausgestellt, dass es besonders vorteilhaft ist, wenn die Andrücktemperatur mehr als 30°C oberhalb des Schmelzpunktes der Kunststofffasern des Faserstoffes liegt. Obwohl die Temperatur beim Erzeugen der Schwächungslinie damit deutlich oberhalb der Schmelztemperatur der Trägerfolie ist, ermöglicht diese hohe Temperatur, die Schwächungslinie in sehr kurzer Zeit einzubringen. Dazu ist es vorteilhaft, wenn der Andrückteil für eine Andrückzeit von kleiner 0,3s, vorzugsweise kleiner 0,2s, ganz besonders vorzugsweise kleiner 0,1s, gegen den Faserstoff gepresst wird. Die in das Verpackungslaminat eingebrachte Wärme kann sich daher nicht so weit ausbreiten, dass die Wärme ausreichen würde, die Trägerfolie in ihrer ganzen Dicke über deren Schmelztemperatur zu erwärmen.

Ebenso ist es sehr vorteilhaft, wenn die dem Faserstoff zugewandte Breite des Andrückteils kleiner 2 mm, vorzugsweise kleiner 1mm, ganz besonders vorzugsweise kleiner 0,5mm, ist. Je kleiner das Ende des Andrückteiles, umso lokal begrenzter kann die Wärme in den Faserstoff eingebracht werden, was vor allem sehr enge, saubere Schwächungslinien ermöglicht.

Weiters ist es vorteilhaft, wenn der Andrückteil entlang der Schwächungslinie mit einer Andrückkraft von größer 30N/cm, vorzugsweise größer 40N/cm, ganz besonders vorzugsweise größer 50 N/cm, gegen den Faserstoff gepresst wird, um die Verbindung zwischen dem Faserstoff und der Trägerfolie zu stärken.

Als Faserstoff wird bevorzugterweise ein einseitig mit einem Kunststoff beschichteter Faserstoff verwendet.

Das Verpackungslaminat aus einer Trägerfolie, auf die ein Faserstoff auf Basis von thermoplastischen Kunststofffasern mittels eines Kaschiermittels, unter Ausbildung einer Verbindungsschicht zwischen Faserstoff und Trägerfolie aufkaschiert ist, wird besonders vorteilhaft für eine Verpackung verwendet, wobei die Verpackung durch Siegeln aneinander liegender Trägerfolien des Verpackungslaminats hergestellt wird und der Faserstoff des Verpackungslaminats als äußere Seite der Verpackung vorgesehen wird, wobei die Schwächungslinie an einer zugänglichen Stelle der Verpackung angeordnet wird.

Vorteilhafterweise wird in das Verpackungslaminat vor oder während der Herstellung der Verpackung eine Schwächungslinie im Verpackungslaminat erzeugt. Dabei kann die Schwächungslinie in einem kontinuierlichen Verfahren vor der Formgebung der Verpackung im Faserstoff erzeugt werden oder taktweise während der Formgebung der Verpackung im Faserstoff erzeugt werden. Damit kann die Schwächungslinie sowohl vor, als auch während der Formgebung der Verpackung erzeugt werden, was die Flexibilität im Verpackungsprozess erhöht.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 ein erfindungsgemäßes Verpackungslaminat,
Fig.2 den Vorgang des Einbringens einer Schwächungslinie in das Verpackungslaminat,
Fig.3 das erfindungsgemäße Verpackungslaminat mit Schwächungslinie,
Fig.4 das, kontinuierliche oder intervallweise, Einbringen einer Schwächungslinie in das Verpackungslaminat mittels Andrückrolle und Andrückkeil,
Fig.5 das Herstellen einer Verpackung mit einer vertikalen Schlauchbeutelmaschine und gleichzeitigem taktweisen Einbringen einer Schwächungslinie,
Fig.6 verschiedene Arten von Verpackungen aus einem erfindungsgemäßen Verpackungslaminat mit Schwächungslinie,
Fig.7 das Herstellen einer Verpackung mit einer vertikalen Schlauchbeutelmaschinen aus einem Verpackungslaminat, in das vorab eine Schwächungslinie eingebracht wurde.

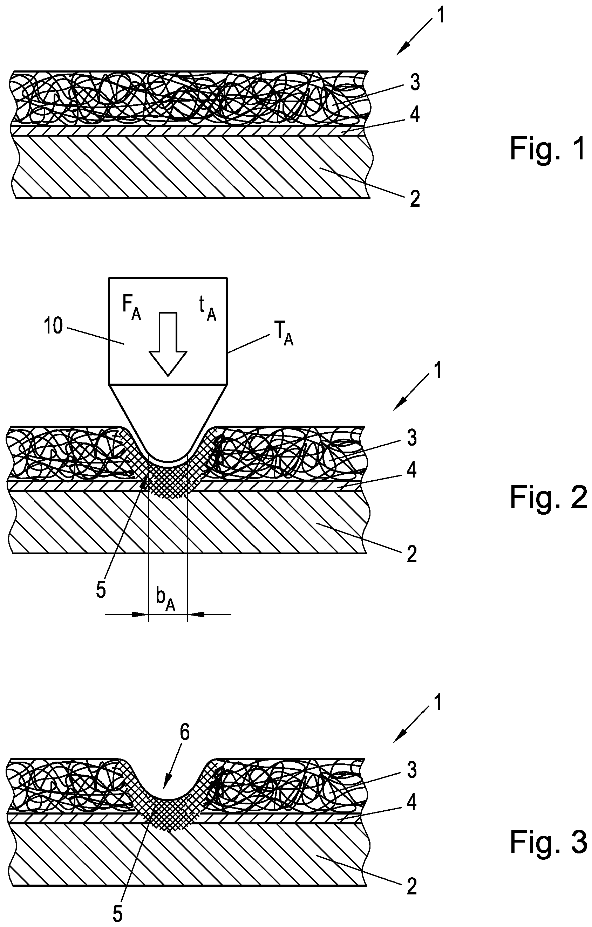

Fig.1 zeigt ein erfindungsgemäßes Verpackungslaminat 1 mit einer Trägerfolie 2 auf die ein Faserstoff 3 aufgebracht ist. Die Verbindung zwischen Trägerfolie 2 und Faserstoff 3 erfolgt beispielsweise durch Kaschieren mit geeigneten Kaschiermitteln, was zu einer Verbindungsschicht 4 aus dem Kaschiermittel zwischen der Trägerfolie 2 und dem Faserstoff 3 führt. Geeignete Kaschiermittel sind in großer Anzahl für die verschiedenen Materialkombinationen bekannt und kommerziell erhältlich. Ebenso sind verschiedene Kaschierverfahren bekannt, wie beispielsweise das Nasskaschieren oder Trockenkaschieren.

Die Trägerfolie 2 ist beispielsweise eine Polyolefinfolie, wie z.B. eine Polyethylen (PE) oder eine Polypropylen (PP) Folie, und bildet eine Siegelschicht des Verpackungslaminates 1 aus. Die Trägerfolie 2 ist daher siegelbar. Die Trägerfolie 2 kann auch mehrschichtig aufgebaut sein, beispielsweise indem mehrere Schichten koextrudiert oder anderweitig verbunden (z.B. kaschiert) werden. Die einzelnen Schichten der Trägerfolie 2 müssen dabei nicht aus demselben Material bestehen. Beispielsweise kann in der Trägerfolie 2 eine Barriereschicht, z.B. aus Aluminium, zwischen zwei Kunststoffschichten vorgesehen sein. Wichtig ist lediglich, dass die äußerste, freie Schicht der Trägerfolie 2 aus einem siegelbaren Material besteht, um eine Siegelschicht auszubilden.

Der Faserstoff 3 besteht in bekannter Weise aus Fasern begrenzter Länge und/oder aus Endlosfasern, die in einem Vliesstoff in zufälliger Anordnung zu einem Vlies zusammengefügt und miteinander verbunden worden sind und die in einem Gewebe durch das Verkreuzen oder Verschlingen von Fasern, wie beispielsweise beim Stricken, Weben oder Wirken, zum Gewebe zusammengefügt sind. Die Herstellung solcher Faserstoffe 3 ist hinlänglich bekannt und solche Faserstoffe 3 sind in vielfältiger Ausführung kommerziell erhältlich. Für die erfindungsgemäßen Verpackungslaminate 1 werden Faserstoffe 3 auf Basis von thermoplastischen Kunststofffasern, insbesondere aus Polyolefinen (wie PE oder PP) oder Polyestern (wie Polyethylenterephthalat (PET) oder Polymilchsäuren (PLA)), eingesetzt.

Die eingesetzten Faserstoffe 3 haben typischerweise ein Flächengewicht von 10-100 g/m². Um ein unerwünschtes Eindringen des Kaschiermittels in oder ein Durchdringen des Kaschiermittels durch den Faserstoff 3 zu vermeiden, werden vorteilhaft auch einseitig mit Kunststoff (vorzugsweise ein Thermoplast) im Extrusionsbeschichtungsverfahren beschichtete Faserstoffe eingesetzt. Solche Materialien finden heute mit einem Vliesstoff als Faserstoff 3 in der Hygieneindustrie als sogenannte "textile Backsheets" für Babywindeln Einsatz und sind typischerweise mit 5 bis 20 g/m² Polyethylen oder Polypropylen beschichtet. In weiterer Folge wird unter einem Faserstoff 3 daher ein reiner Faserstoff, aber auch ein einseitig beschichteter Faserstoff verstanden.

Eine Beschichtung des Faserstoffes 3 auf der zum Verbindungsmittel zugewandten Seite hat den Vorteil eines stärker textilartigen Erscheinungsbildes der Außenseite, während eine Beschichtung auf der sichtbaren Außenseite eine bessere Bedruckbarkeit im Tiefdruckverfahren ermöglicht, wobei aufgrund der dünnen Beschichtung das textilartige Erscheinungsbild weitgehend erhalten bleibt.

Die Trägerfolie 2 besitzt typischerweise eine Dicke, oder Gesamtdicke im Falle eines Trägerfolienlaminats, von 20 bis 100 µm.

Um das Verpackungslaminat 1 siegeln zu können, ist es erforderlich, dass die Schmelztemperatur des Faserstoffes 3 über der Schmelztemperatur der Trägerfolie 2, bzw. der äußersten Schicht der Trägerfolie 2 im Falle eines Trägerfolienlaminats, liegt.

Faserstoffe 3 auf Basis von Kunststofffasern sind manuell in der Regel nicht reißbar, zumindest nicht entlang einer sauberen, glatten Rissnaht. Vielmehr kommt es beim Reißen eines Faserstoffes 3 zum Lösen bzw. Ausreißen einzelner Kunststofffasern des Faserstoffes 3. Um das zu verhindern und um eine einfache Öffnung zu ermöglichen, ist erfindungsgemäß vorgesehen, in das Verpackungslaminat 1 eine definierte Schwächungslinie 6 einzubringen, entlang der das Verpackungslaminat 1 aufgerissen werden kann.

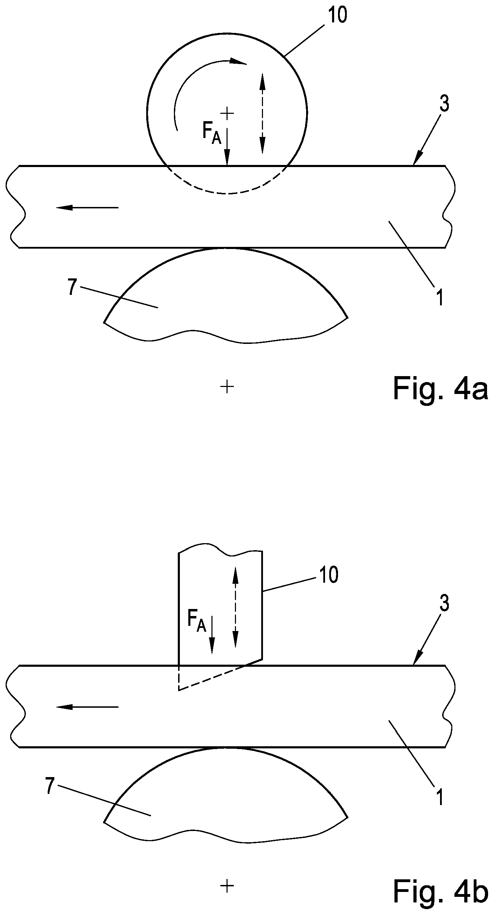

Dazu ist ein temperierter Andrückteil 10 vorgesehen, beispielsweise eine herkömmliche Siegelbacke, ein keilförmiger Andrückteil (Fig.4b) oder eine Andrückrolle (Fig.4a), der die Kunststofffasern des Faserstoffes 3 im Bereich einer Schmelzzone 5 um den Andrückteil 10 aufschmilzt, wie in Fig.2 angedeutet. Der Andrückteil 10 muss dazu natürlich eine Andrücktemperatur T_{A} aufweisen, die oberhalb der Schmelztemperatur der Kunststofffasern des Faserstoffes 3 liegt. Der Andrückteil 10 wird für eine bestimmte Andrückzeit t_{A} und mit einer bestimmten Andrückkraft F_{A} gegen und in den Faserstoff 3 gepresst, wobei die Andrücktemperatur T_{A} so eingestellt wird, dass die Kunststofffasern im Bereich der Schmelzzone 5 vollständig aufschmelzen und sich noch intensiver mit der Trägerfolie 2 verbinden.

Unter vollständig aufschmelzen wird dabei verstanden, dass im Bereich der Schmelzzone 5 keine einzelnen Kunststofffasern mehr vorhanden sind und die Kunststofffasern des Faserstoffes 3 in der Schmelzzone 5 im Bereich des Andrückteils 10 somit schmelzen, womit der Faserverbund in der Schmelzzone 5, der dem Faserstoff 3 die Festigkeit gibt, getrennt wird. Die geschmolzenen Fasern bleiben dabei auf der Trägerfolie 2 als erhärtete Schmelzzone 5 aus dem Material der Kunststofffasern zurück (Fig.3). Diese erhärtete Schmelzzone 5 hat eine geringere mechanische Festigkeit als der Faserstoff 3 und bildet damit die Schwächungslinie 6 aus, entlang der das Verpackungslaminat 1 nun einfach aufgerissen werden kann. Dazu ist es vorteilhaft, wenn für die Trägerfolie 2 beispielsweise ein, zumindest in Öffnungsrichtung, einfach reißender Kunststoff verwendet wird.

Hierbei ist es erwünscht, dass die Trägerfolie 2 an der Grenzschicht zwischen Faserstoff 3 und Trägerfolie 2 angeschmolzen wird. Die Verbindungsschicht 4 ist so dünn, dass diese hier vernachlässigt werden kann und von einer Grenzschicht zwischen Faserstoff 3 und Trägerfolie 2 gesprochen werden kann. Ein Anschmelzen der Trägerfolie 2 hat dabei im Normalfall auch immer ein Schmelzen der Verbindungsschicht 4 in diesem Bereich zur Folge. Die Trägerfolie 2 soll dabei vorzugsweise aber nicht über die gesamte Schichtdicke aufgeschmolzen werden, da das zu einer Beeinträchtigung des Verpackungslaminats 1 führen kann und in der nachfolgenden Verarbeitung des Verpackungslaminats 1 zu Problemen führen kann.

Durch das Anschmelzen der Trägerfolie kommt es zu einer bessern Verbindung zwischen dem Faserstoff 3, bzw. den Kunststofffasern des Faserstoffes 3, und der Trägerfolie 2 im Bereich der Schmelzzone 5, was das Aufreißverhalten des Verpackungslaminats 1 verbessert. Wenn mit dem Andrückteil 10 dabei aktiv eine Andrückkraft F_{A} aufgebracht wird, wird diese Verbindung noch weiter verbessert.

Durch die erhärtete Schmelzzone 5 wird aber gleichzeitig ein Lösen oder Ausreißen von Kunststofffasern beim Reißen des Verpackungslaminats 1 verhindert, da im Bereich der erhärteten Schmelzzone 5 keine Kunststofffasern mehr vorhanden sind. Gleichfalls kann damit erreicht werden, dass das Verpackungslaminat 1 sauber entlang der Schwächungslinie 6 reißt und nicht das benachbarte Verpackungslaminat 1 eingerissen wird.

Nicht zuletzt entstehen durch das erfindungsgemäße Erzeugen der Schwächungslinie 6 am Übergangsbereich von der Schmelzzone 5 zum Faserstoff 2 keine Aufwölbungen aus geschmolzenen oder teilgeschmolzenen Kunststofffasern des Faserstoffes 3, die aus der Ebene des Faserstoffes 3 hervorstehen, was die optischen haptischen Eigenschaften des Verpackungslaminats 1 beeinträchtigen würde. Vielmehr bleibt der Faserstoff 3 an der äußeren, freien Oberfläche im Wesentlichen eben.

Wenn ein beschichteter Faserstoff 3 verwendet wird, kann die Beschichtung beim Einbringen der Schwächungslinie 6 mit aufgeschmolzen werden, muss aber nicht aufgeschmolzen werden.

Die Breite b_{A} des Andrückteils 10 am dem Faserstoff 3 zugewandten axialen Ende des Andrückteils 10 bestimmt im Wesentlichen die Breite der der Schwächungslinie 6. Mit den weiteren Einflussgrößen in Form der Andrücktemperatur T_{A} und der Andrückzeit t_{A} wird damit auch die Breite der Schmelzzone 5 beeinflusst.

Vorzugsweise ist der Andrückteil 10 auf eine Temperatur von mindestens 30°C oberhalb der Schmelztemperatur der Kunststofffasern des Faserstoffes 3 aufgeheizt. Der Andrückteil 10 wird vorteilhaft für eine Zeitdauer im Bereich von bis zu 0,5 s, vorzugsweise nicht mehr als 0,2s, besonders bevorzugt nicht mehr als 0,1s auf den Faserstoff 3 gepresst wird, um die Fasern des Faserstoffes 3 im Bereich des Andrückteils 10 in der Schmelzzone 5 aufzuschmelzen. Hier gilt ganz allgemein, je kürzer, umso besser, um zu verhindern, dass die eingebrachte Wärme auch die Trägerfolie 2, die ja eine niedrigere Schmelztemperatur aufweist wie der Faserstoff 3, schmilzt. Die Andrückkraft F_{A} des Andrückteils 10 entlang der Schwächungslinie 6 beträgt vorzugsweise mindestens 30 N/cm, vorzugsweise mindestens 40 N/cm. Weiterhin sollte die Breite b_{A} des Andrückteils 10 möglichst gering sein, vorzugsweise kleiner 1,5 mm, vorteilhafterweise kleiner 1,0 mm und ganz besonders vorteilhaft kleiner 0,5 mm, um die Wärme lokal sehr begrenzt in den Faserstoff 3 einbringen zu können. Ideal wäre ein spitz zulaufendes Ende des Andrückteils 10. Fertigungstechnisch lässt sich das aber nicht realisieren, sondern es ist mit einer gewissen Abrundung am axialen Ende des Andrückteils 10 zu rechnen, die die Breite b_{A} bestimmt.

Obwohl die Andrücktemperatur T_{A} des Andrückteils 10 damit über der Schmelztemperatur der Trägerfolie 2 liegt, wird ein komplettes Aufschmelzen der Trägerfolie 2 verhindert, da die Andrückzeit t_{A} ausreichend kurz gehalten wird und die Wärme lokal nur sehr begrenzt eingebracht wird. Die Wärme des Andrückteils 10 hat somit nicht genügend Zeit, um sich durch das Verpackungslaminat 1 in die Trägerfolie 2 auszubreiten, um die Trägerfolie 2 über die ganze Schichtdicke über deren Schmelztemperatur zu erwärmen. Damit gelingt es, gezielt nur den Faserstoff 3 und die Grenzschicht zur Trägerfolie 2 lokal im Bereich der Schmelzzone 5 aufzuschmelzen.

Das Einbringen der Schwächungslinie 6 kann während der Herstellung des Verpackungslaminates 1 passieren. Hierzu kann beispielsweise vor oder nach dem Verbinden der Trägerfolie 2 mit dem Faserstoff 3 durch den Andrückteil 10 eine durchgehende oder eine unterbrochene Schwächungslinie 6 eingebracht werden. Das kann beispielsweise mit einer beheizten Andrückrolle (Fig.4a) oder einem feststehenden Keil (Fig.4b), jeweils mit einer Gegendruckrolle 7, als Andrückteil 10 passieren. Auch eine intervallweise Schwächung in Längsrichtung kann durch eine entsprechende, in Richtung Faserstoff 3 hin- und hergehende Zustellbewegung (angedeutet durch den strichlierten Doppelpfeil) des Andrückteils 10 erreicht werden.

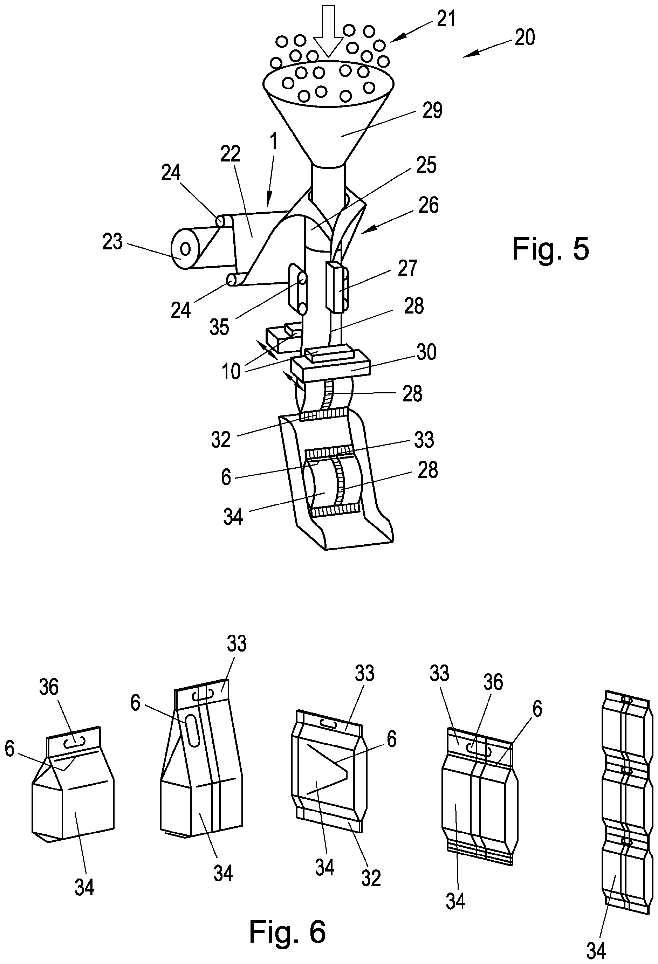

Es ist aber auch denkbar, dass die Schwächungslinie 6 erst beim Herstellen der Verpackung aus dem Verpackungslaminat 1, auch erst beim Befüllen der Verpackung, hergestellt wird, wie in Fig.5 angedeutet. Verpackungen aus Kunststofffolien oder Kunststoffverbundfolien werden in der Regel auf speziellen Verpackungsmaschinen, beispielsweise sogenannten hinlänglich bekannten vertikalen oder horizontalen Schlauchbeutelmaschinen hergestellt. Auch ein erfindungsgemäßes Verpackungslaminat 1 kann auf solchen bekannten Verpackungsmaschinen verarbeitet werden, wie nachfolgend anhand der Fig.5 am Beispiel einer Verpackungsmaschine 20 in Form einer vertikalen Schlauchbeutelmaschine in typischer Ausgestaltung erläutert wird.

Verpackungsmaterial in Form eines Verpackungslaminates 1 wird von einer Rolle 23 als Folienbahn 22 abgewickelt und wird über eine Reihe von Umlenk- und Spannrollen 24 einer Formschulter 25 zugeführt, in der das flächige Verpackungslaminat 1 zu einem Schlauch 26 geformt wird. Der noch offene Schlauch 26 wird anschließend mittels einer Längsnahtsiegeleinheit 27 entlang einer Längsnaht 28 versiegelt. Unter Versiegeln versteht man allgemein das Verbinden des Verpackungslaminates 1 durch Druck und Temperatur, z.B. zwischen zwei aneinandergepresste, temperierte Siegelbacken. Dazu wird die Siegelschicht (Trägerfolie 2) des Verpackungslaminats 1 beim Formen des Folienschlauchs 26 aneinander liegend positioniert. Nach der Längsnahtsiegeleinheit 27 ist eine Quernahtsiegeleinheit 30 angeordnet, mit der durch Siegeln eine erste Quernaht 32 hergestellt wird. In die Formschulter 25 ist ein Fülltrichter 29 eingeführt, über den Füllgut 21 dosiert von oben in den einseitig durch die erste Quernaht 32 verschlossenen Schlauch 26 eingefüllt wird. Nach dem Füllen des Füllgutes 21 wird mittels der Quernahtsiegeleinheit 30 die zweite Quernaht 33 hergestellt, mit der die fertige Verpackung 34, z.B. ein Beutel, verschlossen wird. Das Siegeln der ersten und zweiten Quernaht 32, 33 kann auf machen Verpackungsmaschinen 20 auch gleichzeitig erfolgen, vorzugsweise gleichzeitig mit dem Abtrennen der fertigen Verpackung 34 beim Siegeln. Der Vorschub der Folie durch die Verpackungsmaschine 20 kann mittels Folienvorschubeinheiten 35 bewirkt werden. Solche Verpackungsmaschinen sind in vielen Ausgestaltungen bekannt, wobei das Arbeitsprinzip (Formen einer Verpackungsform, Siegeln, Füllen, Verschließen durch Siegeln, eventuell auch in anderer Reihenfolge) im Wesentlichen unverändert bleibt. Auch können damit verschiedenste Verpackungsformen realisiert werden, wie z.B. in Fig.6 gezeigt. Bei der Fertigung des Beutels kann im Bereich einer Quernaht 32, 33 auch ein Hängeloch 36, z.B. ein sogenanntes standardisiertes Euroloch, eingebracht werden, um die fertige Verpackung 34 in einem Hängedisplay präsentieren zu können.

Um die Schwächungslinie 6 in das Verpackungslaminat 1 der Verpackung 34 einzubringen kann vorgesehen sein, dass an gewünschter Stelle, beispielsweise im Bereich einer Siegeleinheit der Verpackungsmaschine 20, ein Andrückteil 10 angeordnet ist, der die Schwächungslinie 6 wie oben beschrieben erzeugt. Im Ausführungsbeispiel nach der Fig.5 wird die Schwächungslinie 6 z.B. im Bereich einer Quernaht 33 erzeugt. Dazu ist der Andrückteil 10 beispielsweise als zusätzliche Siegelbacke ausgeführt, die taktweise betätigt wird (z.B. gleichzeitig mit der Siegeleinheit), um die Schwächungslinie 6 zu erzeugen. Die Schwächungslinie 6 kann dabei auch nahezu beliebig geformt sein, wie in Fig.6 angedeutet. Die Schwächungslinie 6 ist dabei natürlich an einer von außen zugänglichen Stelle der Verpackung 34 vorgesehen.

Beim Einbringen der Schwächungslinie 6 während der Herstellung der Verpackung ist generell darauf zu achten, dass die innen liegenden und aneinander liegenden Trägerfolien 2 im Bereich der Schwächungslinie 6 nicht verschmelzen. Das bedeutet, dass die Trägerfolie 2 in diesem Fall nicht über die ganze Dicke der Trägerfolie 2 aufgeschmolzen werden darf. Das kann durch die kurze Andrückzeit t_{A} und das lokale Begrenzen der Wärmeeinbringung gewährleistet werden.

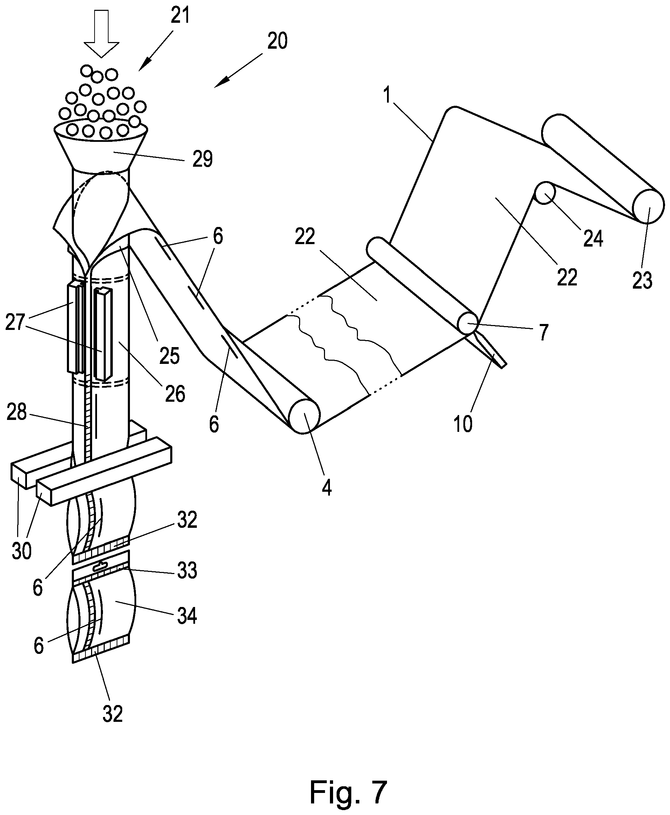

Im Ausführungsbeispiel nach Fig.7 wurden bereits vor der Verarbeitung des Verpackungslaminats 1 auf einer Verpackungsmaschine 20 an den erforderlichen Stellen mit einem Andrückteil 10 Schwächungslinien 6 in das Verpackungslaminat 1 eingebracht. Beim Formen der Verpackung 34 kommen die Schwächungslinien 6 an den gewünschten Stellen der Verpackung 34 zu liegen. Ansonsten entspricht der Arbeitsablauf dem mit Bezug auf die Fig.5 beschriebenen, wobei an der Verpackungsmaschine 20 selbst natürlich kein Andrückteil 10 erforderlich ist. In diesem Fall ist es vorteilhaft, wenn die Trägerfolie 2 nicht ganz durchgeschmolzen wird, weil die weiche Trägerfolie 2 dann auf den diversen Rollen kleben bleiben kann, was den Produktionsprozess stören kann. Durch Verwendung spezieller Rollen, z.B. mit einer entsprechenden Beschichtung, könnte man aber auch das vermeiden.

Im nachfolgenden wird ein konkretes Ausführungsbeispiels eines erfindungsgemäßen Verpackungslaminats 1 näher beschrieben.

Der verwendete Faserstoff 3 des Verpackungslaminats 1 ist ein Vliesstoff bestehend aus 14 g/m² PP-Fasern (Schmelztemperatur 163°C), der einseitig mit einer Kunststofffolie mit 18 g/m2 eines Blends aus PE (66%) und PP (33%) beschichtet ist. Der beschichtete Faserstoff 3 wurde mit einem üblichen, lösungsmittelhaltigen Polyurethan-basierten Kaschiermittel mit einer PE-Siegelfolie von 60 µm Dicke als Trägerfolie 2 kaschiert, um das Verpackungslaminat 1 auszubilden. Dabei befand sich die beschichtete Seite des Faserstoffes 3 dem Kaschiermittel zugewandt. Die Verbindungsschicht 4 hat eine Dicke von 3µm.

Aus diesem Verpackungslaminat 1 wurden Schlauchbeutel (sogenannte Pillow-bags) in etwa wie in Fig.6 der zweite Beutel von rechts) hergestellt. Während der Herstellung wurde unterhalb einer Quernaht 33 eine Schwächungslinie 6 wie oben beschrieben eingebracht.

Die Schwächung des Verpackungslaminates 1 erfolgte einmal durch eine handelsübliche Siegelbacke mit insgesamt sechs, spitz zulaufenden, parallelen Siegelstegen als Andrückteil 10. Spitz zulaufend bedeutet dabei dass das Ende eines Siegelsteges idealerweise spitz ist, in der Realität aber eine fertigungstechnisch bedingte Abrundung aufweist, wobei die Abrundung so klein wie möglich sein sollte. Die Breite b_{A} der Siegelstege der Siegelbacke war kleiner 0.5mm. Durch die sechs Siegelstege wurden auch sechs nebeneinander liegende Schwächungslinien 6 erzeugt. Sechs nebeneinander liegende Schwächungslinie 6 wird man an einer realen Verpackung natürlich in der Regel nicht vorsehen. Allerdings konnte damit geprüft werden, ob die Schwächungslinien 6 beim Öffnen sauber entlang der Schwächungslinie 6 reißt, oder ob der Riss dazu tendiert, auf eine benachbarte Schwächungslinie 6 überzuspringen. Das andere Mal wurde eine Siegelbacke mit einem einzigen Siegelsteg mit einer Breite b_{A} von 1,5mm als Andrückteil 10 verwendet.

Im Weiteren wurde die Andrücktemperatur T_{A} und die Andrückkraft F_{A} bei gleichbleibender Andrückzeit t_{A} variiert. Nach dem Erzeugen der Schwächungslinie 6 wurde das Einreißverhalten des Verpackungslaminates 1 entlang der Schwächungslinie 6 in Schulnoten beurteilt.

Dabei gilt:
- Note 1: gerader Riss entlang der Schwächungslinie 6 ohne ausreißende Kunststofffasern
- Note 2: gerader Riss entlang der Schwächungslinie 6 mit ausgefranstem Folienrand
- Note 3: gerader Riss entlang der Schwächungslinie 6 mit einzelnen hervorstehenden Kunststofffasern
- Note 4: Riss verlässt die vorgesehene, durch die Schwächungslinie 6 vorgegebene Richtung und/oder herausgerissene Fasern
- Note 5: Keine Schwächung des Faserstoffes 3 erkennbar

Die Note 1 und Note 2 sind für ein Verpackungslaminat 1 für die Herstellung einer Verpackung in der Lebensmittelindustrie akzeptabel. Verpackungslaminate 1 mit der Note 3 nur bedingt, wenn eine mögliche, geringfügige Verunreinigung durch Kunststofffasern kein Problem darstellt.

Die Ergebnisse lassen sich wie folgt zusammenfassen:

| Andrücktemperatur T_{A} [°C] | Andrückzeit t_{A} [s] | Andrückkraft F_{A} [N/cm] | Breite Andrückteil b_{A} [mm] | Rissqualität [Schulnoten] |
|---|---|---|---|---|
| 170 | 0,1 | 60 | 1,5 | 5 |
| 190 | 0,1 | 60 | 1,5 | 4 |
| 200 | 0,1 | 60 | 1,5 | 2 |
| 220 | 0,1 | 20 | 1,5 | 3 |
| 200 | 0,1 | 60 | <0,5 | 1 |
| 220 | 0,1 | 60 | <0,5 | 1 |
| 220 | 0,1 | 20 | <0,5 | 2 |

Siegelzeiten t_{A} größer 0,1s führten, in Verbindung mit den notwendigen hohen Andrücktemperaturen T_{A} von mindestens 200°C regelmäßig zu einem unerwünschten Verschweißen der aneinander liegenden Trägerfolie 2 der Verpackung. Solche höheren Kontaktzeiten wären nur bei einer Schwächung während der Herstellung des Verpackungslaminats 1 (vgl. Fig.4) möglich.

Man erkennt weiters, dass ein möglichst schmaler Andrückteil 10 vorteilhaft ist, weil damit eine sehr kurzfristige, lokale Aufschmelzung möglich ist. Das führt auch zu einer sehr schmalen Schwächungslinie 6, was aus haptischen und optischen Gründen von Vorteil ist.

## Patentansprüche

1. Verfahren zum Herstellen eines Verpackungslaminats (1) aus einer Trägerfolie (2), auf die ein Faserstoff (3) auf Basis von thermoplastischen Kunststofffasern mittels eines Kaschiermittels, unter Ausbildung einer Verbindungsschicht (4) zwischen Faserstoff (3) und Trägerfolie (2), aufkaschiert ist, **dadurch gekennzeichnet, dass** die Kunststofffasern des Faserstoffes (3) im Bereich einer Schmelzzone (5) mit einem auf eine Andrücktemperatur (T_{A}) temperierten Andrückteil (10) vollständig aufgeschmolzen werden, um im Bereich der Schmelzzone (5) eine definierte Schwächungslinie (6) auszubilden, wobei die Verbindungschicht (4) zwischen Faserstoff (3) und Trägerfolie (2) mit aufgeschmolzen wird.

2. Verfahren nach Anspruch 1, **dadurch gekennzeichnet, dass** die Andrücktemperatur (T_{A}) mehr als 30°C oberhalb der Schmelztemperatur der Kunststofffasern des Faserstoffes (3) liegt.

3. Verfahren nach Anspruch 1, **dadurch gekennzeichnet, dass** der Andrückteil (10) für eine Andrückzeit (t_{A}) von kleiner 0,3s, vorzugsweise kleiner 0,2s, ganz besonders vorzugsweise kleiner 0,1s, gegen den Faserstoff (3) gepresst wird.

4. Verfahren nach Anspruch 1, **dadurch gekennzeichnet, dass** die dem Faserstoff (3) zugewandte Breite (b_{A}) des Andrückteils (10) kleiner 2 mm, vorzugsweise kleiner 1mm, ganz besonders vorzugsweise kleiner 0,5mm, ist.

5. Verfahren nach Anspruch 1, **dadurch gekennzeichnet, dass** der Andrückteil (10) entlang der Schwächungslinie (6) mit einer Andrückkraft (F_{A}) von größer 30N/cm, vorzugsweise größer 40N/cm, ganz besonders vorzugsweise größer 50 N/cm, gegen den Faserstoff (3) gepresst wird.

6. Verfahren nach Anspruch 1, **dadurch gekennzeichnet, dass** als Faserstoff (3) ein einseitig mit einem Kunststoff beschichteter Faserstoff (3) verwendet wird.

7. Verpackungslaminat aus einer Trägerfolie (2), auf die ein Faserstoff (3) auf Basis von thermoplastischen Kunststofffasern mittels eines Kaschiermittels, unter Ausbildung einer Verbindungsschicht (4) zwischen Faserstoff (3) und Trägerfolie (2),aufkaschiert ist, **dadurch gekennzeichnet, dass** der Faserstoff (3) zur Ausbildung einer Schwächungslinie (6) im Bereich einer Schmelzzone (5) vollständig aufgeschmolzen ist, wodurch die Kunststofffasern des Faserstoffes (3) im Bereich der Schmelzzone (5) getrennt sind und mit der Schmelzzone (5) verbunden sind.

8. Verpackungslaminat nach Anspruch 7, **dadurch gekennzeichnet, dass** die Kunststofffasern aus thermoplastischen Kunststoff, insbesondere aus einem Polyolefin, einem Polyester oder einer Polymilchsäure, sind.

9. Verpackungslaminat nach Anspruch 7 oder 8, **dadurch gekennzeichnet, dass** der Faserstoff (3) ein Flächengewicht von 10 bis 100g/m² aufweist.

10. Verpackungslaminat nach einem der Ansprüche 7 bis 9, **dadurch gekennzeichnet, dass** der Faserstoff (3) ein einseitig mit einem Kunststoff beschichteter Faserstoff ist.

11. Verpackungslaminat nach Anspruch 7, **dadurch gekennzeichnet, dass** die Trägerfolie (2) eine Polyolefinfolie ist.

12. Verwendung des Verpackungslaminats (1) nach einem der Ansprüche 7 bis 11 zur Herstellung einer Verpackung (34), **dadurch gekennzeichnet, dass** die Verpackung (34) durch Siegeln aneinander liegender Trägerfolien (2) des Verpackungslaminats (1) hergestellt wird und der Faserstoff (3) des Verpackungslaminats (1) als äußere Seite der Verpackung (34) vorgesehen wird, wobei die Schwächungslinie (6) an einer zugänglichen Stelle der Verpackung (34) angeordnet wird.

13. Verwendung nach Anspruch 12, **dadurch gekennzeichnet, dass** die Schwächungslinie (6) in das Verpackungslaminat (1) vor oder während der Herstellung der Verpackung (34) erzeugt wird.

14. Verwendung nach Anspruch 13 **dadurch gekennzeichnet, dass** die Schwächungslinie (6) in einem kontinuierlichen Verfahren vor der Formgebung der Verpackung (34) im Faserstoff (3) erzeugt wird.

15. Verwendung nach Anspruch 13 **dadurch gekennzeichnet, dass** die Schwächungslinie (6) taktweise während der Formgebung der Verpackung (34) im Faserstoff (3) erzeugt wird.

## Claims

1. Method for producing a packaging laminate (1) from a carrier film (2), onto which a fibrous material (3) based on thermoplastic synthetic fibers is laminated by means of a lamination agent so as to produce a connection layer (4) between the fibrous material (3) and the carrier film (2), **characterized in that** the synthetic fibers of the fibrous material (3) are melted completely in the region of a melting zone (5) using a pressing part (10) that is temperature-controlled to a pressing temperature (T_{A}) in order to form a defined tear line (6) in the region of the melting zone (5), the connection layer (4) between the fibrous material (3) and the carrier film (2) also being melted.

2. Method according to claim 1, **characterized in that** the pressing temperature (T_{A}) is more than 30°C above the melting temperature of the synthetic fibers of the fibrous material (3).

3. Method according to claim 1, **characterized in that** the pressing part (10) is pressed against the fibrous material (3) for a pressing time (t_{A}) of less than 0.3 s, preferably less than 0.2 s, most preferably less than 0.1 s.

4. Method according to claim 1, **characterized in that** the width (b_{A}) of the pressing part (10) facing the fibrous material (3) is less than 2 mm, preferably less than 1 mm, most preferably less than 0.5 mm.

5. Method according to claim 1, **characterized in that** the pressing part (10) is pressed against the fibrous material (3) along the tear line (6) using a pressing force (F_{A}) of more than 30 N/cm, preferably more than 40 N/cm, most preferably more than 50 N/cm.

6. Method according to claim 1, **characterized in that** a fibrous material (3) coated with a plastics material on one side is used as the fibrous material (3).

7. Packaging laminate produced from a carrier film (2), onto which a fibrous material (3) based on thermoplastic synthetic fibers is laminated by means of a lamination agent so as to form a connection layer (4) between the fibrous material (3) and the carrier film (2), **characterized in that** the fibrous material (3) is completely melted in the region of a melting zone (5) in order to form a tear line (6), as a result of which the synthetic fibers of the fibrous material (3) are separated in the region of the melting zone (5) and are connected to the melting zone (5).

8. Packaging laminate according to claim 7, **characterized in that** the synthetic fibers are made of thermoplastic material, in particular a polyolefin, a polyester or a polylactic acid.

9. Packaging laminate according to either claim 7 or claim 8, **characterized in that** the fibrous material (3) has a weight per unit area of from 10 to 100 g/m².

10. Packaging laminate according to any of claims 7 to 9, **characterized in that** the fibrous material (3) is a fibrous material that is coated with a plastics material on one side.

11. Packaging laminate according to claim 7, **characterized in that** the carrier film (2) is a polyolefin film.

12. Use of the packaging laminate (1) according to any of claims 7 to 11 for producing packaging (34), **characterized in that** the packaging (34) is produced by sealing adjoining carrier films (2) of the packaging laminate (1), and the fibrous material (3) of the packaging laminate (1) is provided as the outer face of the packaging (34), the tear line (6) being arranged at an accessible place on the packaging (34).

13. Use according to claim 12, **characterized in that** the tear line (6) is made in the packaging laminate (1) before or during production of the packaging (34).

14. Use according to claim 13, **characterized in that** the tear line (6) is made in the fibrous material (3) in a continuous method before the shaping of the packaging (34).

15. Use according to claim 13, **characterized in that** the tear line (6) is made in the fibrous material (3) cyclically during shaping of the packaging (34).

## Revendications

1. Procédé de production d'un stratifié d'emballage (1) constitué d'un film support (2) sur lequel une matière fibreuse (3) à base de fibres synthétiques thermoplastiques est stratifiée à l'aide d'un moyen de stratification, avec formation d'une couche de liaison (4) entre la matière fibreuse (3) et le film support (2), **caractérisé en ce que** les fibres de la matière fibreuse (3) sont entièrement fondues au niveau d'une zone de fusion (5) avec un élément de pression (10), équilibré à une température de pression (T_{A}), pour former au niveau de la zone de fusion (5) une ligne définie (6) de moindre résistance mécanique, la couche de liaison (4) étant fondue entre la matière fibreuse (3) et le film support (2).

2. Procédé selon la revendication 1, **caractérisé en ce que** la température de pression (T_{A}) est supérieure de plus de 30 °C à la température de fusion des fibres de matière synthétique de la matière fibreuse (3).

3. Procédé selon la revendication 1, **caractérisé en ce que** l'élément de pression (10) est pressé contre la matière fibreuse (3) pendant un temps de pression (t_{A}) de moins de 0,3 s, de préférence de moins de 0,2 s, de manière préférée de moins de 0,1 s.

4. Procédé selon la revendication 1, **caractérisé en ce que** la largeur (b_{A}), faisant face à la matière fibreuse (3), de l'élément de pression (10) est inférieure à 2 mm, de préférence inférieure à 1 mm, de manière tout particulièrement préférée inférieure à 0,5 mm.

5. Procédé selon la revendication 1, **caractérisé en ce que** l'élément de pression (10) est pressé le long de la ligne (6) de moindre résistance mécanique avec une force de pression (F_{A}) supérieure à 30 N/cm, de préférence supérieure à 40 N/cm, de manière tout particulièrement préférée supérieure à 50 N/cm, contre la matière fibreuse (3).

6. Procédé selon la revendication 1, **caractérisé en ce que** l'on utilise comme matière fibreuse (3) une matière fibreuse (3) revêtue sur un côté d'une matière synthétique.

7. Stratifié d'emballage d'un film support (2) sur lequel une matière fibreuse (3) à base de fibres synthétiques thermoplastiques est stratifiée à l'aide d'un moyen de stratification, avec formation d'une couche de liaison (4) entre la matière fibreuse (3) et le film support (2), **caractérisé en ce que** ce que la matière fibreuse (3) est entièrement fondue au niveau d'une zone de fusion (5) pour former une ligne (6) de moindre résistance mécanique de sorte que les fibres synthétique de la matière fibreuse (3) sont séparées au niveau de la zone de fusion (5) et sont liées à la zone de fusion (5).

8. Stratifié d'emballage selon la revendication 7, **caractérisé en ce que** les fibres synthétiques sont constituées d'une matière thermoplastique, en particulier d'une polyoléfine, d'un polyester ou d'un acide polylactique.

9. Stratifié d'emballage selon la revendication 7 ou 8, **caractérisé en ce que** la matière fibreuse (3) a un grammage de 10 à 100 g/m².

10. Stratifié d'emballage selon l'une des revendications 7 à 9, **caractérisé en ce que** la matière fibreuse (3) est revêtue sur un côté d'une matière synthétique.

11. Stratifié d'emballage selon la revendication 7, **caractérisé en ce que** le film support (2) est un film de polyoléfine.

12. Utilisation du stratifié d'emballage (1) selon l'une des revendications 7 à 11 pour la production d'un emballage (34), **caractérisé en ce que** l'emballage (34) est produit par scellement de films support (2) adjacents du stratifié d'emballage (1) et **en ce que** la matière fibreuse (3) du stratifié d'emballage (1) est prévue comme côté extérieur de l'emballage (34), la ligne (6) de moindre résistance mécanique étant disposée à un endroit accessible de l'emballage (34).

13. Utilisation selon la revendication 12, **caractérisée en ce que** la ligne (6) de moindre résistance mécanique est générée dans le stratifié d'emballage (1) avant ou pendant la production de l'emballage (34).

14. Utilisation selon la revendication 13, **caractérisée en ce que** la ligne (6) de moindre résistance mécanique est générée dans la matière fibreuse (3) en continu avant la mise en forme de l'emballage (34).

15. Utilisation selon la revendication 13, **caractérisée en ce que** la ligne (6) de moindre résistance mécanique est générée par intermittence dans la matière fibreuse (3) lors de la mise en forme de l'emballage (34).
